## Europäisches Patentamt

## European Patent Office

## Office européen des brevets

(11) Numéro de publication: **0 143 702**
A2

(12) # DEMANDE DE BREVET EUROPEEN

(21) Numéro de dépôt: **84402353.1**

(51) Int. Cl.⁴: **G 01 L 9/10**, G 01 L 13/02

(22) Date de dépôt: **19.11.84**

(30) Priorité: **25.11.83 FR 8318842**

(71) Demandeur: **SEREG S.A., 12, place des Etats-Unis, F-92120 Montrouge (FR)**

(43) Date de publication de la demande: **05.06.85 Bulletin 85/23**

(72) Inventeur: **Bertrand, Pierre, 1, rue Guynemer, F-91430 Igny (FR)**

(74) Mandataire: **Dronne, Guy et al, Giers Schlumberger 12 Place des Etats-Unis B.P. 121, F-92124 Montrouge (FR)**

(84) Etats contractants désignés: **BE CH DE GB IT LI NL**

(54) **Capteur inductif de pression différentielle.**

(57) La présente invention concerne un capteur inductif de pression différentielle.

Un diaphragme de mesure (1) sépare de façon étanche deux demi-chambres (9, 10) susceptibles d'être sollicitées respectivement par l'une et l'autre des pressions à comparer; dans une zone centrale, le diaphragme de mesure (1) porte deux noyaux magnétiques (118, 127) disposés respectivement de part et d'autre de celui-ci et qui, lorsque le diaphragme 1 fléchit, se déplacent à l'intérieur d'inductances simples respectives (132, 133) dont l'impédance varie de ce fait; par mesure de cette variation, on détermine la position des noyaux dans les inductances associées et, de ce fait, la différence entre les pressions sollicitant respectivement l'une et l'autre face du diaphragme de mesure (1).

Application à la réalisation de capteurs inductifs de pression différentielle à correction automatique de zéro.

1

La présente invention concerne un capteur inductif de pression différentielle, de type comportant :

- un corps rigide, délimitant une chambre interne,

- un diaphragme flexible de mesure, subdivisant la chambre en deux demi-chambres de façon étanche,

- des moyens pour appliquer, directement ou par l'intermédiaire d'un fluide hydraulique sensiblement incompressible, deux pressions à comparer respectivement à l'une et l'autre demi-chambres, une zone centrale du diaphragme étant apte à se déplacer d'une valeur représentative de la valeur de la différence entre ces deux pressions selon une direction de référence perpendiculaire à un plan de référence fixe par rapport au corps et défini par un plan général du diaphragme supposé au repos,

- des moyens électromagnétiques de mesure de ce déplacement, par induction.

De tels capteurs sont largement répandus, et la demanderesse en commercialise un mode de réalisation pratique sous la référence 6445.

Dans ce mode de réalisation, les moyens électromagnétiques de mesure comportent :

- un noyau magnétique disposé dans l'une des deux demi-chambres et porté de façon solidaire, par l'intermédiaire d'un doigt de liaison, par la zone centrale du diaphragme de telle sorte que son déplacement éventuel selon la direction de référence soit représentatif de celui de la zone centrale du diaphragme,

- deux inductances simples, identiques, portées de façon solidaire par le corps dans lequel elles sont juxtaposées selon la direction de référence autour du noyau magnétique, l'ensemble étant dimensionné et positionné de telle sorte qu'un plus grand engagement du noyau magnétique à l'intérieur de l'une des deux inductances, par variation de la différence entre les pressions à comparer, se traduise par un plus faible engagement de ce noyau dans l'autre inductance ; la mesure de la différence entre les deux pressions à comparer s'effectue alors par la différence entre les impédances respectives, de préférence les selfs, des deux inductances."

Ce mode de réalisation donne toute satisfaction lorsqu'il est appelé à travailler dans des conditions de température parfaitement déterminée, sensiblement constante.

Dès lors que la température varie, on constate une variation des mesures, en raison de l'influence de la température sur les caractéristiques géométriques des différentes parties du capteur, par dilatation, et sur les caractéristiques magnétiques et électriques de l'ensemble formé par le noyau, les inductances, et éventuellement les parties adjacentes du corps du capteur.

Le but de la présente invention est de proposer une structure des moyens électromagnétiques de mesure qui soit propre à assurer une correction automatique, permanente, de l'influence de la température sur le zéro, et ceci sans accroissement sensible de l'encombrement et du coût du capteur.

A cet effet, la présente invention propose dans un capteur du type général décrit en préambule, de réaliser les moyens électromagnétiques de mesure sous une forme comportant :

- deux noyaux magnétiques identiques, portés de façon solidaire par la zone centrale du diaphragme et disposés symétriquement l'un de l'autre de part et d'autre de celle-ci, respectivement dans l'une et l'autre demi-chambres, selon un alignement mutuel parallèle à la direction de référence,

- deux inductances simples, identiques, portées de façon solidaire par le corps, dans des positions symétriques l'une de l'autre par rapport au plan de référence, selon un alignement mutuel parallèle à la direction de référence, chaque inductance étant disposée autour de l'un respectif des noyaux de façon à présenter une impédance fonction de la position de ce dernier par rapport à elle, et

– des moyens de liaison électrique des deux inductances avec des moyens pour effectuer la différence de leurs impédances,

le corps présentant au moins une symétrie partielle par rapport audit plan de référence. Le nombre des inductances est cependant le même que dans le cas des capteurs déjà diffusés par la demanderesse, évoqués plus haut, si bien que le coût et l'encombrement d'un capteur conforme à l'invention sont tout à fait comparables à ceux de l'un de ces capteurs connus. En outre on prévoit avantageusement que le corps porte de façon solidaire des moyens définissant autour de chaque inductance, dans le corps, une cavité étanche vis-à-vis de la chambre interne, ces moyens étant amagnétiques au moins entre l'inductance correspondante et le noyau magnétique associé à celle-ci.

Lors du fonctionnement du capteur, les inductances sont alors placées à l'abri d'une sollicitation par les pressions à comparer ; ainsi, les deux inductances travaillent dans des conditions de pression identiques et sensiblement constantes, par exemple à la pression atmosphérique, et leurs caractéristiques électriques et magnétiques ne sont pas influencées par les pressions à comparer.

De plus, avantageusement, chaque inductance, comportant une armature à l'intérieur de la cavité correspondante, est portée par le corps, à l'intérieur de cette cavité, par l'intermédiaire d'une pluralité de pattes élastiques, sensiblement parallèles à la direction de référence, et solidaires d'une part du corps et d'autre part de l'armature, dont elles font avantageusement partie intégrante.

Cette disposition préserve chacune des inductances des contraintes mécaniques pouvant résulter de variations de température en raison de la différence de dilatation entre ces pièces et le corps du capteur.

On remarque que toutes les dispositions qui viennent d'être décrites coopèrent pour rendre le capteur selon l'invention aussi insensible que possible aux variations de température et de pression absolue des fluides dont il sert à comparer les pressions.

Cependant, il reste réalisable moyennant un encombrement et un coût de fabrication comparables à ceux des capteurs inductifs de pression différentielle de l'art antérieur.

D'autres caractéristiques et avantages du capteur selon l'invention ressortiront de la description ci-dessous, relative à un mode de mise en oeuvre non limitatif, ainsi que des dessins annexés qui font partie intégrante de cette description.

La figure 1 montre une vue d'un capteur selon l'invention, en coupe par un plan de symétrie perpendiculaire au plan de référence.

La figure 2 montre une vue éclatée d'une partie de ce capteur, en coupe par le même plan.

La figure 3 montre une vue d'une inductance du capteur, en coupe par le même plan.

La figure 4 montre un schéma d'un circuit électrique associé au capteur.

On a désigné par 1 un diaphragme de mesure, flexible ; ce diaphragme 1 est par exemple réalisé en un acier au cobalt, et notamment dans un acier à haute teneur de cobalt du type commercialisé sous les marques Phynox et Elgiloy.

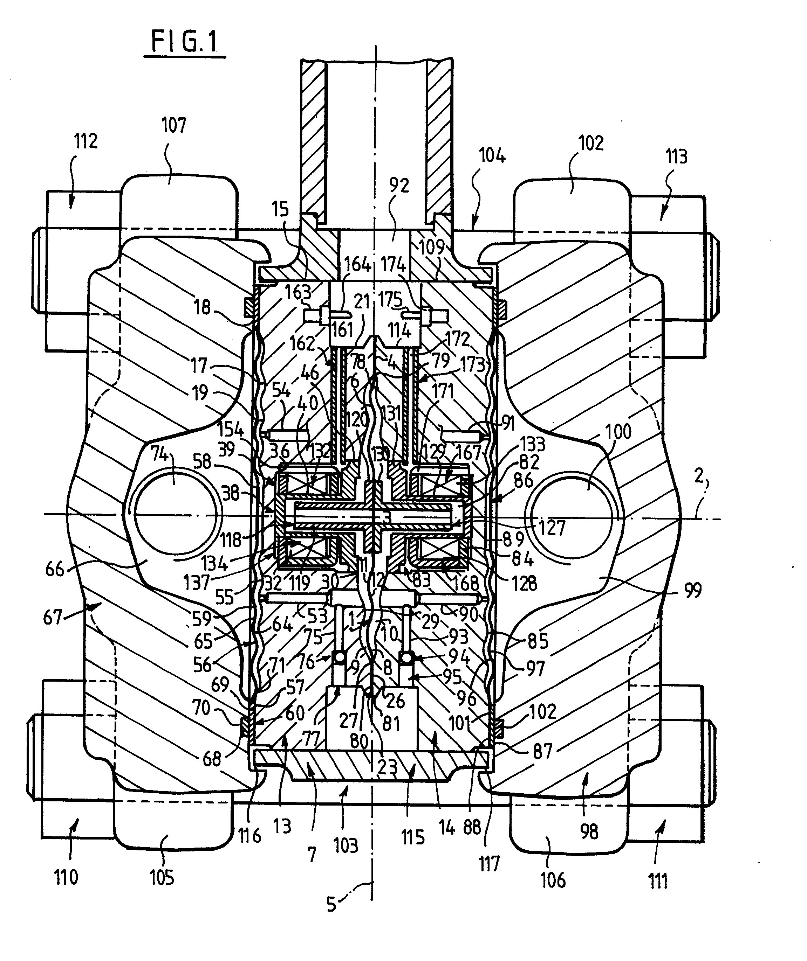

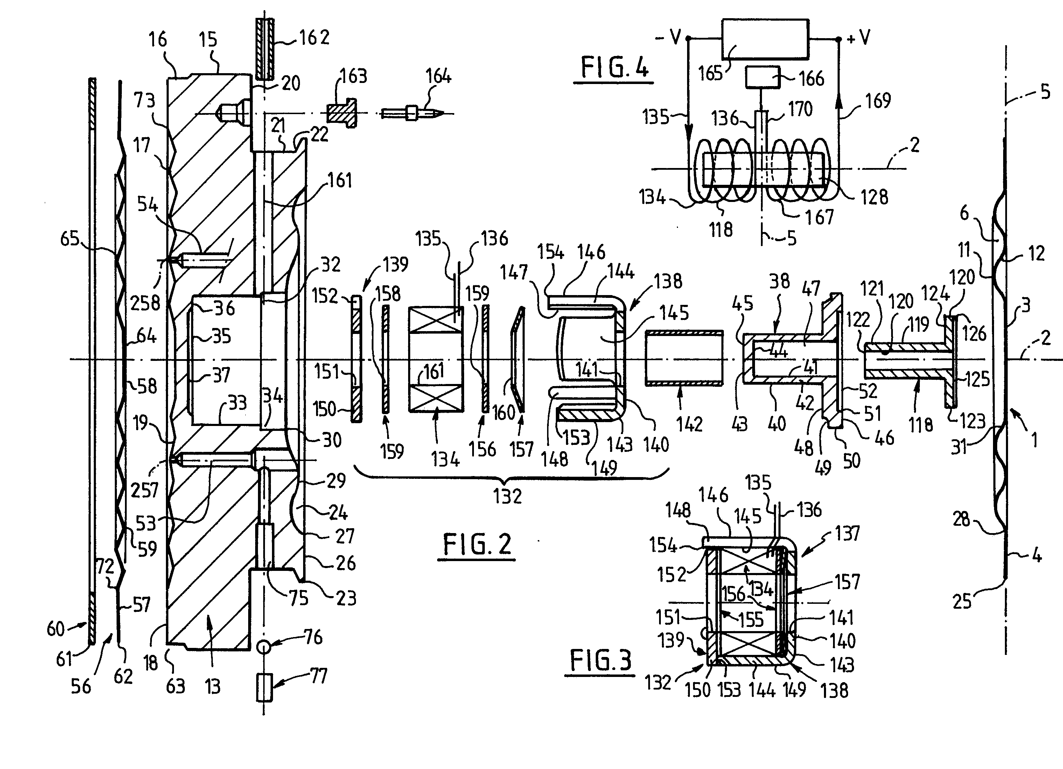

Au repos, ce diaphragme 1 présente la conformation illustrée aux figures 1 et 2, c'est-à-dire une forme de révolution autour d'un axe 2, avec une zone centrale 3 en forme de disque et une zone périphérique 4, l'une et l'autre plates et de même plan général 5 perpendiculaire à l'axe 2 ; ces deux zones 3 et 4 sont raccordées par des ondulations 6 également de révolution autour de l'axe 2, lesquelles ondulations permettent à la zone 3 de se déplacerélastiquement par rapport à la zone 4, en restant parallèle à cette dernière, dans l'un et l'autre sens suivant une direction parallèle à l'axe 2, comme cela est connu dans l'art antérieur.

Par sa zone périphérique 4, le diaphragme 1 est enserré de façon étanche et solidarisé avec un corps rigide 7 en matériau étanche, tel que de l'acier inoxydable 316L, dont il subdivise de façon étanche une chambre interne 8 en deux demi-chambres 9, 10 vers lesquelles il présente des faces respectives 11, 12 de même superficie, définies par sa zone centrale 3 et sa zone portant les ondulations 6, intermédiaire entre la zone centrale 3 et la zone périphérique 4.

On remarque que le plan général 5, considéré comme lié à la zone périphérique 4 du diaphragme 1, est fixe par rapport au corps 7 ; le plan général 5 considéré comme lié à la zone périphérique 4 du diaphragme 1, l'axe 2 et sa direction seront par conséquent considérés respectivement comme plan de référence, axe de référence et direction de référence dans la description qui suit.

Comme il ressort plus particulièrement de la figure 1, le corps 7 est formé notamment de deux parties de corps 13 et 14 qui, à l'exception de zones limitées expressément désignées par la suite, présentent une forme de révolution autour de l'axe 2 et sont symétriques l'une de l'autre par rapport au plan 5. Ces deux parties de corps sont assemblées par soudure à la zone périphérique 25 du diaphragme 4.

Si on considère plus particulièrement la partie 13 du corps 7, en se référant à la figure 2, on voit qu'elle présente une face périphérique extérieure 15 cylindrique de révolution autour de l'axe 2 et définissant son encombrement maximal transversalement par rapport à ce dernier ; dans le sens d'un éloignement par rapport au plan 5, cette face périphérique 15 se raccorde, par un décrochement annulaire 16 également de révolution autour de l'axe 2, à la périphérie extérieure 63 d'une face 17 délimitant la partie 13 dans ce sens et qui définit pour le corps 7 une face externe à la chambre 8 ; cette face 17 présente deux zones 18 et 19 dont la première est annulaire, plane, perpendiculaire à l'axe 2 et définit son raccordement avec le décrochement 16 et dont la deuxième est centrale, intercepte l'axe 2, et s'infléchit dans le sens d'un rapprochement vis-à-vis du plan 5 vis-à-vis de la zone 18, en définissant des ondulations de révolution autour de l'axe 2.

Vers le plan 5, la face périphérique extérieure 15 de la partie 13 se raccorde à la périphérie extérieure d'une face annulaire 20 plane, perpendiculaire à l'axe 2 et tournée vers le plan 5, laquelle face 20 se raccorde par sa périphérie intérieure à une face périphérique extérieure 21 de la partie 13, cylindrique de révolution autour de l'axe 2 avec un diamètre inférieur à celui de la face périphérique extérieure 15, face 21 que la face 20 délimite ainsi dans le sens d'un éloignement par rapport au plan 5 ; dans le sens d'un rapprochement vis-à-vis de ce dernier, la face 21 se raccorde, par une face 22 tronconique de révolution autour de l'axe 2 et divergeant dans ce sens, à la périphérie extérieure 23 d'une face 24 délimitant la partie 13 vers le plan 5, c'est-à-dire tournée vers le diaphragme 1.

La périphérie extérieure 23, circulaire d'axe 2, de la face 24 présente un diamètre intermédiaire entre les diamètres respectifs des faces périphériques extérieures 21 et 15 de la partie 13, et ce diamètre est sensiblement égal à celui de la périphérie extérieure 25, cylindrique de révolution autour de l'axe 2, du diaphragme 1 dont la solidarisation avec la partie 13 est précisément assurée par liaison entre sa périphérie extérieure 25 et celle 23 de la face 24.

A proximité immédiate de sa périphérie extérieure 23, la face 24 présente une zone 26 annulaire, plane, perpendiculaire à l'axe 2 vers lequel elle est délimitée par une périphérie intérieure 27 circulaire d'axe 2 avec un diamètre sensiblement égal à celui de la transition 28, circulaire d'axe 2, entre la zone périphérique 4 du diaphragme 1 et la zone de celui-ci portant les ondulations 6, si bien que la zone périphérique 4 du diaphragme 1 s'appuie à plat contre la zone périphérique 26 de la face 24 ; cette zone périphérique 26 de la face 24 définit la zone de la partie 13 du corps 7 la plus proche du plan de référence 5.

Dans le sens d'un rapprochement vis-à-vis de l'axe 2 succède à la zone périphérique 26 de la face 24 une zone intermédiaire 29 de celle-ci ; cette zone intermédiaire 29 définit un infléchissement de la face 24 dans le sens d'un éloignement vis-à-vis du plan 5, à partir de la zone 26, et présente des ondulations qui sont espacées de la zone de la face 11 du diaphragme 1 correspondant aux ondulations 6 lorsque le diaphragme 1 est au repos, pour définir la demi-chambre 9, mais sont propres à être épousées par cette zone ondulée de la face 11 lorsque le diaphragme 1 subit la déformation élastique évoquée plus haut, dans le sens d'un rapprochement de sa zone centrale 3 vis-à-vis de la partie 13 du corps 7 ; le contact des ondulations 6 avec celles de la zone intermédiaire 29 de la face 24 définit une limite à la déformation du diaphragme 1 dans ce sens. L'homme du métier déterminera aisément quelle forme doit être donnée à cet effet à la zone intermédiaire 29 de la face 24, en fonction de la forme des ondulations 6 du diaphragme 1.

Dans le sens d'un rapprochement vis-à-vis de l'axe 2, la zone intermédiaire 29 de la face 24 présente une périphérie intérieure 30 circulaire d'axe 2, avec un diamètre voisin de celui de la transition 31 entre la zone du diaphragme 1 portant les ondulations 6 et la zone centrale 3 de ce diaphragme.

Cette périphérie intérieure 30 de la zone intermédiaire 29 de la face 24 définit le bord d'un trou borgne central 32 de celle-ci ; ce trou borgne central 32 est délimité, à l'intérieur de la partie 13 du corps 7, d'une part par une face périphérique 33 cylindrique de révolution autour de l'axe 2 et qui se raccorde à la périphérie intérieure 30 de la zone intermédiaire 29 de la face 24 par une zone 34 en léger décrochement, également cylindrique de révolution autour de l'axe 2 , et d'autre part par une face de fond 35 présentant une zone périphérique extérieure 36 annulaire, plane, perpendiculaire à l'axe 2 et adjacente à la face périphérique 33, et une zone centrale 37 en forme de disque plan, perpendiculaire à l'axe 2, en retrait par rapport à la zone 36, et qui constitue la majeure partie de la face 35.

Comme il ressort de l'examen de la figure 1, à l'intérieur du trou borgne 32 est insérée une pièce rapportée 38 réalisée en un matériau amagnétique tel que par exemple un acier inoxydable de qualité 316L, qui est fixée sur la partie 13 du corps 7 par exemple par soudure afin de délimiter à l'intérieur du trou borgne 32 une cavité annulaire 39, de révolution autour de l'axe 2, isolée de façon étanche vis-à-vis de la demi-chambre 9.

A cet effet, la pièce rapportée 38 présente :

– une zone 40 en forme de manchon, délimitée par une face périphérique intérieure 41 et par une face périphérique extérieure 42, l'une et l'autre cylindriques de révolution autour de l'axe 2 avec des diamètres respectifs inférieurs au diamètre de la zone centrale 37 de la face de fond 35 du trou borgne 32 ;

– une zone de fond 43 fermant l'intérieur 47 de la zone en forme de manchon 40, transversalement par rapport à l'axe 2, dans le sens d'un éloignement par rapport au plan 5 ; à cet effet, la zone de fond 43 est délimitée par deux faces planes 44 et 45, en forme de disque, perpendiculaires à l'axe 2, dont la première est située à l'intérieur de la zone en forme de manchon 40 et jointive par sa périphérie extérieure de la face périphérique intérieure 41 de cette zone 40 et dont la deuxième est extérieure à la zone en forme de manchon 40 et jointive par sa périphérie extérieure de la face périphérique extérieure 42 de cette zone 40 ; comme il ressort de la figure 1, la pièce rapportée 38 est adjacente par la face 45 à la zone centrale 37 de la face de fond 35 du trou borgne 32 ;

– une zone en forme de collerette 46 délimitant la zone en forme de manchon 40 transversalement à l'axe 2, vers le plan 5, en laissant l'intérieur 47 de la zone 40 totalement dégagé vers ce plan parallèlement à l'axe 2 de telle sorte que l'intérieur 47 de la zone 40 forme partie intégrante de la demi-chambre 9 ; à cet effet, la zone 46 est délimitée dans le sens d'un éloignement par rapport au plan 5 par une face annulaire plane 48 perpendiculaire à l'axe 2, et qui se raccorde par sa périphérie intérieure à la face périphérique extérieure 42 de la zone en forme de manchon 40 et par sa périphérie extérieure, par l'intermédiaire d'une zone en décrochement 49, de révolution autour de l'axe 2, à une face périphérique extérieure 50 de la zone 46, laquelle face est cylindrique de révolution autour de l'axe 2 avec un diamètre sensiblement identique à celui de la zone 34 de la face périphérique 33 du trou borgne 32 ; la face 50, ainsi délimitée par son raccordement avec le décrochement 49 dans le sens d'un éloignement par rapport au plan 5, est limitée dans le sens d'un rapprochement par rapport à celui-ci en se raccordant à la périphérie extérieure d'une face annulaire plane 51, perpendiculaire à l'axe 2 et tournée vers le plan 5, laquelle face 51 présente par ailleurs une périphérie intérieure d'un diamètre intermédiaire entre celui de la face 50 et celui de la face 41 ; une face annulaire 52, également plane et perpendiculaire à l'axe 2, placée en retrait par rapport à la face 51, relie la périphérie intérieure de cette dernière à la face périphérique intérieure 41 de la zone en forme de manchon 40.

Comme il ressort de l'examen de la figure 1, la jonction entre la face 51 de la collerette 46 et la face périphérique extérieure 50 de cette dernière coïncide sensiblement avec la périphérie intérieure 30 de la zone intermédiaire 29 de la face 24 de la partie de corps 13, à laquelle la pièce rapportée 38 est soudée de façon étanche à ce niveau, pour isoler de façon étanche la cavité 39 vis-à-vis de la demi-chambre 9 qui par contre englobe l'intérieur 47 de la zone en forme de manchon 40.

Plus précisément, la demi-chambre 9 est délimitée de façon étanche par la face 11 du diaphragme 1, par la zone intermédiaire 29 de la face 24 de la partie 13 du corps 7, par les faces 51 et 52 de la zone en forme de collerette 50 de la pièce rapportée 38, par la face périphérique intérieure 41 de la zone en forme de manchon 40 de celle-ci, et par la face 44 de sa zone de fond 43, la zone périphérique 4 du diaphragme 1 pouvant être considérée avec une bonne approximation comme en contact parfaitement à plat avec la zone périphérique 26 de la face 24 de la partie 13.

Dans la demi-chambre 9 ainsi définie, et plus précisément dans la zone intermédiaire 29 de la face 24 de la partie 13 du corps 7, débouche un réseau de conduits tels que 53 et 54 qui débouchent par ailleurs dans la face 17 de la partie 13 et qui constituent une exception à la forme générale de cette dernière, de révolution autour de l'axe 2, puisqu'ils sont disposés autour du trou borgne central 32 ; dans l'exemple illustré, chacun d'eux présente une forme générale rectiligne d'axe propre, tel que respectivement 257 ou 258, rectiligne et parallèle à l'axe 2, les axes respectifs tels que 257 et 258 des différents conduits tels que 53 et 54 étant de préférence régulièrement répartis angulairement en référence à l'axe 2, à une même distance de ce dernier bien que l'on puisse également choisir un autre mode de répartition sans sortir pour autant du cadre de la présente invention ; de même, on a obtenu de bons résultats aux essais en prévoyant ainsi trois conduits tels que 53 et 54 à l'intérieur de la partie 13, mais on ne sortirait pas non plus du cadre de la présente invention en en prévoyant un nombre différent, supérieur ou inférieur.

Chacun des conduits tels que 53 et 54 est ainsi propre à assurer une liaison hydraulique entre la demi-chambre 9, d'une part, et un volume plat 55, d'autre part, que délimite de façon étanche, avec la face 17 de la partie 13 du corps 7, un diaphragme séparateur 56 flexible élastiquement, étanche, de préférence réalisé en un matériau amagnétique qui peut être identique à celui du diaphragme de mesure 1.

Le diaphragme 56, placé en regard de la face 17 suivant la direction de l'axe 2, présente comme le diaphragme 1 une zone périphérique 57 et une zone centrale 58, l'une et l'autre plates et orientées perpendiculairement à l'axe 2, dont la première présente une forme annulaire et la seconde la forme d'un disque, et qui sont reliées entre elles par une zone intermédiaire ondulée 59 ; l'ensemble du diaphragme 56 présente comme le diaphragme 1 une forme de révolution autour de l'axe 2.

La zone périphérique extérieure 57 du diaphragme séparateur 56 présente, transversalement à l'axe 2, des dimensions respectivement intérieure et extérieure identiques à celles de la zone 18 de la face 17, et le diaphragme séparateur 56 s'appuie à plat par sa zone 57 contre cette zone 18 ; à la zone 57 se superpose à plat, à l'opposé de la zone 18 en référence à la direction de l'axe 2, une bague 60 de forme annulaire, présentant des dimensions sensiblement identiques suivant une direction transversale à l'axe 2, et la solidarisation du diaphragme séparateur 56 avec la partie 13 du corps est assurée par soudure mutuelle étanche de la bague 60, du diaphragme séparateur 56 et de la partie 13 du corps sur la totalité de la périphérie extérieure 61 de la bague 60, de la périphérie extérieure 62 du diaphragme séparateur 56, et de la périphérie extérieure 63 de la zone 18 de la face 17, à la liaison entre cette dernière et le décrochement 16 de la face périphérique extérieure 15 de la partie 13.

La forme du diaphragme séparateur 56 est telle que ce dernier, au repos, soit écarté de la face 17 par sa zone ondulée 59 et sa zone centrale 58 pour définir le volume intermédiaire 55 mais que, par un fléchissement élastique de sa zone centrale 58 par rapport à sa zone périphérique 57 parallèlement à l'axe 2, vers la face 17, sa zone ondulée 59 et sa zone centrale 58 viennent épouser étroitement cette dernière notamment au niveau de ses ondulations 19 ; à cet effet, avantageusement, les ondulations du diaphragme 56 sont réalisées par un emboutissage direct de ce dernier sur la face 17 de la partie 13.

La bague 60 pouvant être considérée comme indéformable de même que la partie 13 du corps 7, le montage qui vient d'être décrit ne laisse une liberté de mouvement du diaphragme séparateur 56 vis-à-vis notamment de la partie 13 et plus précisément de la face 17 de celle-ci qu'en ce qui concerne la zone ondulée 59 et la zone centrale 58 du diaphragme, lesquelles présentent respectivement vers l'intérieur du volume 55, c'est-à-dire vers la zone ondulée 19 de la face 17, et vers l'extérieur de ce volume, à l'intérieur de la bague 60, des faces que l'on a désigné respectivement par 64 et 65 et qui présentent la même superficie.

La face 65 constitue, dans le cas de ce mode de mise en oeuvre de l'invention, une face de réception de l'une des pressions à comparer et, à cet effet, le corps 7 délimite de façon étanche, en regard de cette face 65, une chambre 66 de réception du fluide correspondant ; dans l'exemple illustré, cette chambre 66 est délimitée par un couvercle rigide 67 présentant au contact de la bague 60 une face annulaire plane 69, de révolution autour de l'axe 2 auquel elle est perpendiculaire, laquelle face 69 est creusée d'une gorge annulaire 70, également de révolution autour de l'axe 2 et qui loge un joint torique d'étanchéité 68 ; par sa périphérie intérieure 71, circulaire et d'un diamètre sensiblement identique au diamètre intérieur de la bague 60 et à celui de la jonction 72 entre la zone périphérique 57 du diaphragme séparateur 56 et la zone ondulée 59 de celui-ci, ou encore à celui de la jonction 73 entre les zones 17 et 18 de la face 17 de la partie 13 du corps 7, la face 69 délimite le bord d'une cavité qui, aménagée dans le couvercle 67 et accessible de l'extérieur de celui-ci par un embout 74 de raccordement à une source de l'un des fluides dont on désire comparer les pressions, délimite la chambre 66 à l'intérieur du couvercle 67.

La transmission à la face 11 du diaphragme de mesure 1 de la pression du fluide introduit dans la chambre 66 lorsque le capteur est en service, laquelle pression sollicite la face 65 du diaphragme séparateur 56, est assurée par un fluide hydraulique, sensiblement incompressible, dont on remplit intégralement le volume 55 intermédiaire entre le diaphragme séparateur 56 et la face 17 de la partie 13 du corps 7, le réseau de conduits tels que 53 et 54 et la demi-chambre 9 alors que le diaphragme séparateur 56 et le diaphragme de mesure 1 sont au repos, c'est-à-dire en équipression sur leurs deux faces respectives, via un conduit de remplissage 75 prévu à cet effet dans la partie 13 du corps 7 et que l'on bouche ensuite de façon étanche par exemple par introduction successive d'une bille 76 introduite à force et d'un bouchon 77 que l'on soude de façon étanche sur la partie 13 du corps, à l'embouchure du conduit 75 avantageusement située dans la face 21 de la partie 13 d'où le conduit 75 part radialement, en référence à l'axe 2, pour rejoindre l'un 53 des conduits du réseau ; comme fluide hydraulique, on peut avantageusement utiliser une huile silicone, présentant l'avantage d'une viscosité changeant peu avec la température, ou une huile fluorée, d'autres fluides hydrauliques pouvant naturellement être choisis sans que l'on sorte pour autant du cadre de la présente invention.

La deuxième partie 14 du corps 7 est exactement symétrique de la partie 13 qui vient d'être décrite, par rapport au plan général 5, à cette seule exception qu'elle présente à l'intérieur de la demi-chambre 10, vers la face 12 du diaphragme de mesure 1, une face 78 qui n'est pas symétrique de la zone intermédiaire 29 de la face 24 de la partie 13 de corps, mais complémentaire de la zone de la face 12 du diaphragme 1 correspondant aux ondulations 6 de celui-ci, lorsque celui-ci présente en direction de la partie 14 du corps 7, selon l'axe 2, une flèche de même valeur que la flèche qui, lorsqu'il se déplace vers la partie 13 du corps 7, lui fait épouser la zone intermédiaire 29 de la face 24 de cette partie 13 ; toutefois, la face 78 de la partie 14 du corps 7 se raccorde comme la zone intermédiaire 29 de la face 24 de la partie 13, dans le sens d'un éloignement radial par rapport à l'axe 2, à la périphérie intérieure 79 d'une face annulaire plane 80 prenant appui à plat contre la zone périphérique 4 du diaphragme 1 dans une position symétrique de celle de la zone périphérique 26 de la face 24 de la partie 13 du corps 7 par rapport au plan 5 ; cette face 79 présente par ailleurs une périphérie extérieure 81 symétrique de la périphérie extérieure 23 de la zone périphérique 26 de la face 24 de la partie 13, par rapport au plan 5, la solidarisation du diaphragme 1 avec les deux parties 13 et 14 du corps 7 étant assurée par soudure conjointe sur la totalité des périphéries extérieures juxtaposées 23, 25, 81.

Symétriquement par rapport au trou borgne 32 de la partie 13 en référence au plan 5, la partie 14 présente un trou borgne 82 dans lequel est insérée une pièce 83 symétrique de la pièce 38 par rapport au plan 5, laquelle pièce 83 est soudée de façon étanche à la partie 14 comme il a été décrit en référence à la pièce 38 et à la partie 13 de façon à définir dans le trou borgne 82 une cavité 84 ainsi isolée de façon étanche de la demi-chambre 10 que définissent la face 12 du diaphragme 1, dans la zone centrale 3 de celui-ci et dans sa zone portant les ondulations 6, la face ondulée 78 de la partie 14 du corps 7, et la pièce rapportée 83.

Selon une conformation symétrique de celle de la face 17 par rapport au plan 5, la partie 14 du corps 7 présente une face externe 85 avec laquelle un diaphragme séparateur 86, étanche et flexible élastiquement, symétrique du diaphragme séparateur 56 par rapport au plan 5 lorsque l'un et l'autre sont au repos, c'est-à-dire en équipression, et solidarisé avec la partie 14 par interposition à plat et soudure périphérique continue entre une bague annulaire 87 et une zone périphérique annulaire 88 de la face 85, définit un volume intermédiaire plat 89.

Ce volume intermédiaire 89 communique avec la demi-chambre 10 par un réseau de conduits de liaison hydraulique tels que 90 et 91, dont chacun est symétrique d'un conduit de liaison hydraulique tel que respectivement 53 ou 54 de la partie 13 par rapport au plan 5.

Comme il a été dit plus haut en référence à la partie 13, l'ensemble formé par les conduits de liaison hydraulique tels que 90 et 91, le volume intermédiaire 89 et la demi-chambre 10 est rempli à la fabrication du capteur, alors que le diaphragme de mesure 1 et le diaphragme séparateur 86 sont au repos, d'un fluide hydraulique sensiblement incompressible tel qu'une huile silicone, une huile fluorée, ou autre, via un conduit 93 de remplissage qui est symétrique du conduit de remplissage 75 par rapport au plan 5 et que l'on obture ensuite de façon étanche par introduction successive d'une bille 94 engagée à force et d'un bouchon 95 que l'on soude sur la partie 14.

Respectivement vers le volume 89 et vers l'extérieur decelui-ci, à l'intérieur de la zone d'appui à plat entre la bague 87 et la zone 88 de la face 85 de la partie 14 du corps 7, le diaphragme séparateur 86 présente des faces 96 et 97 dont la superficie est identique à la superficie que les faces 64 et 65 du diaphragme séparateur 56 présentent à l'intérieur de la zone périphérique 57 d'appui à plat entre la bague 60 et la zone 18 de la face 17 de la partie 13 du corps 7, et la face 97 définit la face de réception de l'autre des pressions à comparer.

A cet effet, le corps 7 porte de façon solidaire un couvercle rigide qui est symétrique du couvercle 67 par rapport au plan 5 et définit en regard de la face 97 une chambre 99 symétrique de la chambre 66 par rapport à ce plan et destinée à recevoir, via un raccord 100 analogue au raccord 74, d'une source appropriée, le fluide dont on désire comparer la pression à celle du fluide introduit via le raccord 74 dans la chambre 70.

Comme le couvercle 67 vis-à-vis de la bague 60, le couvercle 98 est en contact sous pression, par une face annulaire périphérique 101 symétrique de la face 69 du couvercle 67 par rapport au plan 5, avec interposition d'un joint d'étanchéité thorique 102 logé dans une gorge appropriée, avec la bague 87 ; cet appui étanche des deux couvercles est assuré par des tiges filetées telles que 103 et 104, en un nombre de préférence supérieur à 2 et selon une équirépartition circonférentielle en référence à l'axe 2, à l'extérieur de la face périphérique extérieure 15 de la partie 13 et de la face périphérique extérieure 109, symétrique de cette face 15 par rapport au plan 5, de la partie 14, lesquelles tiges filetées telles que 103 et 104 traversent des trous lisses d'oreilles appropriées telles que 105, 106, 107, 108 des couvercles 67 et 98, parallèlement à l'axe 2, pour relier ces deux couvercles et recevoir des écrous tels que 110, 111, 112, 113 appliquant aux deux couvercles 67 et 98 des efforts tendant à les rapprocher mutuellement parallèlement à l'axe 2, en emprisonnant entre eux, sous pression, les deux parties 13 et 14 du corps 7.

On remarquera que le diamètre des périphéries 71, 72, 73, respectivement de la bague 60, du diaphragme séparateur 56, de la face 17 de la partie 13, et les diamètres correspondants de la bague 87, du diaphragme séparateur 86, et de la face 85 de la partie 14 du corps 7 sont supérieurs au diamètre de la face 21 de la partie 13, et à celui, identique, de la face 114 qui lui correspond par symétrie sur la partie 14 du corps 13, ainsi qu'à celui des périphéries 23, 25 et 81, si bien que l'effort appliqué par les écrous tels que 110 à 113 sur les couvercles 67 et 98 se transmet aux parties 13 et 14 du corps, via les bagues 60 et 87, en porte-à-faux par rapport aux faces 21 et 114 et par rapport aux périphéries 23, 25, 81, c'est-à-dire par rapport à la zone de soudure du diaphragme de mesure 1 sur les deux parties de corps 13 et 14 ; l'homme du métier comprendra que, par un choix approprié de ces différents diamètres et des efforts appliqués par les écrous tels que 110 à 113 sur les deux couvercles 67 et 98, on peut ainsi obtenir une compensation de la tendance naturelle des parties 13 et 14 à se dilater radialement, en référence à l'axe 2, sous l'effet de la compression qui leur est appliquée par les écrous tels que 110 à 113, par l'effet inverse résultantd'une action des couvercles 67 et 98 sur les parties 13 et 14 en porte-à-faux par rapport à la zone de soudure de ces dernières sur le diaphragme de mesure 1, et ainsi éviter une mise en tension radiale de ce dernier.

Pour ne pas nuire à cette compensation, une bague annulaire 115 enveloppant les faces périphériques extérieures respectives 15 et 109 des parties 13 et 14 du corps 7 entre les couvercles 67 et 98, en rejoignant ces deux surfaces périphériques de façon à dissimuler la soudure du diaphragme 1 sur l'une et l'autre des parties 13 et 14, est montée à libre coulissement axial sur celles-ci, et avec un jeu suffisant vis-à-vis de l'une et l'autre et vis-à-vis des couvercles 67 et 98 (jeux 116 et 117).

Compte tenu des dispositions qui viennent d'être décrites, les pressions appliquées respectivement dans les chambres 66 et 99 à la face 65 du diaphragme séparateur 56 et à la face 97 du diaphragme séparateur 86 se transmettent identiquement respectivement aux faces 11 et 12 du diaphragme de mesure 1, via le fluide hydraulique contenu dans l'ensemble constitué par le volume 55, des conduits tels que 53 et 54 de la partie 13 du corps 7, la demi-chambre 9, d'une part et l'ensemble constitué par le volume 89, les conduits tels que 90 et 91 de la partie 14 du corps 7, et la demi-chambre 10 d'autre part.

Le fluide hydraulique étant choisi aussi incompressible que possible, toute différence entre les pressions régnant respectivement dans les chambres 66 et 99 se traduit, à partir d'un état initial du capteur correspondant pour chacun des diaphragmes 1, 56, 86 au repos, en équipression sur ses deux faces, par un fléchissement conjoint des parties centrales respectives de ces trois diaphragmes, parallèlement à l'axe 2, soit vers la chambre 99 si la pression est supérieure dans la chambre 66, soit vers cette dernière si la pression est supérieure dans la chambre 99.

La flèche ainsi éventuellement prise dans un sens ou dans l'autre, suivant l'axe 2, par les parties centrales respectives des trois diaphragmes, et notamment par celle du diaphragme de mesure 1, est représentative de la différence éventuelle entre les pressions régnant dans les chambres 66 et 99, et des moyens qui vont être décrits à présent sont prévus pour mesurer cette flèche, en donnant une indication de son sens, en ce qui concerne la zone centrale 3 du diaphragme de mesure 1.

A cet effet, cette zone centrale 3 porte de façon solidaire, par exemple par soudure, deux noyaux magnétiques identiques 118 et 127 qui sont disposés respectivement de part et d'autre de cette zone centrale 3, c'est-à-dire respectivement dans l'une et l'autre des demi-chambres 9 et 10, et sont symétriques l'un de l'autre par rapport à la zone centrale 3 selon un alignement mutuel coïncidant avec l'axe 2.

Le noyau magnétique 118 est plus particulièrement visible à la figure 2, où l'on voit qu'il présente une zone en forme de manchon 119, délimitée par une face périphérique intérieure 120 et une face périphérique extérieure 121 l'une et l'autre cylindriques de révolution autour de l'axe 2 et, dans le sens d'un éloignement par rapport au plan 5, par une face annulaire plane 122 reliant ces faces 120 et 121 perpendiculairement à l'axe 2 ; dans le sens d'un rapprochement par rapport au plan 5, la zone en forme de manchon 119 se raccorde à une zone 120 en forme de collerette annulaire, de révolution autour de l'axe 2, délimitée dans le sens d'un éloignement par rapport à ce dernier par une face périphérique extérieure 123 cylindrique de révolution autour de cet axe 2, laquelle est raccordée à la face périphérique extérieure 121 de la zone en forme de manchon 19 par une face annulaire plane 124, perpendiculaire à l'axe 2, tournée dans le sens d'un éloignement par rapport au plan 5, et à la face périphérique intérieure 120 de -la--zone 119 par une face annulaire 125, également de révolution autour de l'axe 2 et plane, perpendiculaire à celui-ci; dans sa majeure partie, cette face 125 présentant toutefois à sa jonction avec la face 123 un rebord 126 présentant une forme annulaire de révolution autour de l'axe et tourné vers le plan 5.

Ce rebord 126 est utilisé pour assurer une fixation du noyau 118 sur la face 11 du diaphragme 1 par un procédé de soudure par décharge électrique, connu en lui-même.

On remarquera que le diamètre de la face périphérique extérieure 123 de la zone en forme de collerette 120 du noyau est au plus égal au diamètre de la zone centrale 3 du diaphragme 1, pour autoriser une fixation sur cette zone de ce dernier, et à celui de la face en retrait 52 de la zone 46 en forme de collerette de la pièce 38 rapportée à l'intérieur de la partie 13 du corps 7 ; en outre, le diamètre de la face périphérique extérieure 121 de la zone en forme de manchon 119 est inférieur à celui de la face périphérique intérieure 41 de la zone en forme de manchon 40 de la pièce rapportée 38, la distance séparant, parallèlement à l'axe 2, les faces 122 et 124 du noyau 118 est inférieure à la distance séparant parallèlement à cet axe la face 44 et la face en retrait 52 de la pièce rapportée 38, et l'épaisseur hors-tout de la zone en forme de collerette 120 du noyau 118, mesurée parallèlement à l'axe 2 entre la face 124 et le rebord 126, est inférieure à la distance séparant la face 11 du diaphragme 1, dans la zone centrale 3 de celui-ci, et la face en retrait 52 de la pièce rapportée 38 lorsque le diaphragme de mesure 1 est au repos, de telle sorte que, si l'on considère cet état comme état initial, la zone en forme de manchon 119 du noyau 118 soit engagée à l'intérieur de la zone en forme de manchon 40 de la pièce rapportée 38, sa face 122 étant alors située entre les positions respectives des faces 48 et 44 si l'on se réfère à la direction de l'axe 2, et puisse se déplacer dans le sens d'une plus grande pénétration dans la pièce 38 lorsque la zone centrale 3 du diaphragme 1 fléchit vers la partie 13 du corps 7 ; de préférence, l'épaisseur de la partie en forme de collerette 120 du noyau 118, définie comme ci-dessus, est telle que sa face 124 vienne au contact de la face 52, pour définir une butée à l'encontre d'un déplacement de plus grande amplitude du diaphragme 1 dans ce sens, lorsque les ondulations 6 épousent celles de la zone intermédiaire 29 de la face 24 de la partie 13 du corps ; de préférence, également, la distance séparant parallèlement à l'axe 2 les faces 122 et 124 est voisine de la distance séparant parallèlement à cet axe 2 la face 44 et la zone en dépression 52 de la pièce rapportée 38, bien qu'inférieure à cette distance, de telle sorte que lorsque la butée s'établit ainsi, la face 122 soit proche de la face 44.

Ces différentes dimensions sont néanmoins choisies telles que le déplacement du noyau 118 à l'intérieur de la pièce rapportée 38 reste compatible avec l'écoulement correspondant du fluide à l'intérieur de la demi-chambre 9.

Le noyau 127 est en tout point identique au noyau 118, et présente notamment une zone en forme de manchon 128 qui correspond

0143702

à la zone 119 du noyau 118 et qui, engagé dans une zone 129 de la pièce 83, laquelle zone 129 présente la forme d'un manchon et correspond à la zone en forme de manchon 40 de la pièce rapportée 38 par symétrie par rapport au plan 5, pénètre davantage dans cette zone 129 lors d'un déplacement de la zone centrale 3 du diaphragme 1 vers la partie 14 du corps 7 du capteur ; le noyau 127 présente par ailleurs une zone en forme de collerette 130 correspondant à la zone en forme de collerette 120 du noyau 118 et qui, d'une part, sert à sa solidarisation par soudure avec la zone centrale 3 du diaphragme 1 et, d'autre part, constitue une butée limitant la pénétration de la zone 128 du noyau 127 dans la zone 129 de la pièce rapportée 83, en coopération avec une zone 131 de cette pièce rapportée 83 correspondant à la zone en forme de collerette 46 de la pièce 38, par symétrie par rapport au plan 5 ; lors de cette venue en butée, les ondulations 6 du diaphragme 1 épousent la face ondulée 78 de la partie 14 du corps 7.

De préférence, les volumes intermédiaires 55 et 89 et les volumes respectifs des demi-chambres 9, 10 sont voisins, de telle sorte que la venue du diaphragme de mesure 1 en butée contre la partie 13 du corps 7 ou la partie 14 de celui-ci corresponde à une venue en butée du diaphragme séparateur 86 contre la face 85 de la partie 14, ou du diaphragme séparateur 56 contre la face 17 de la partie 13, respectivement.

On remarquera qu'un déplacement de la zone centrale 3 du diaphragme 1 dans un sens donné selon l'axe 2, se traduisant par une plus grande pénétration de la zone en forme de manchon de l'un des noyaux magnétiques dans la zone en forme de manchon de la pièce rapportée associée, se traduit également par un dégagement de la zone en forme de manchon de l'autre noyau magnétique vis-à-vis de la zone en forme de manchon de la pièce rapportée associée à ce dernier ; les noyaux magnétiques 118 et 127, et les pièces rapportées 38 et 83 sont dimensionnés et positionnés, si l'on se réfère à la position de repos du diaphragme de mesure 1, de telle sorte que la venue de l'un des noyaux en butée contre la pièce associée correspondante ne se traduise pas par un dégagement total de l'autre noyau vis-à-vis de la pièce rapportée qui lui est associée, et que l'engagement minimal corresponde par exemple à un engagement sur environ la moitié des longueurs respectives de la zone en forme de manchon d'un noyau magnétique et de la zone en forme de manchon d'une pièce rapportée, ces longueurs étant considérées suivant l'axe 2.

Pour mesurer la position de chacun des noyaux 118 et 127 à l'intérieur de la pièce rapportée correspondante 38 ou 83, suivant la direction de l'axe 2, sont prévues respectivement dans la cavité 39 et dans la cavité 84 deux inductances simples 132 et 133, identiques, occupant dans le corps des positions fixes symétriques par rapport au plan 5.

La structure de l'inductance 132, identique à celle de l'inductance 133, va être décrite à présent en référence aux figures 2 et 3, où l'on a désigné par 134 une bobine simple, présentant deux fils de raccordement électrique 135 et 136 et par 137 une armature en matériau magnétique de celle-ci ; ce matériau magnétique est avantageusement un alliage ferro-nickel, constituant également les deux noyaux magnétiques 118 et 127 ; à titre d'exemple non limitatif.

L'armature 137 se présente, dans le mode de réalisation préféré, sous la forme d'un assemblage soudé de deux pièces, dont l'une 138 présente la forme d'un godet obtenu par emboutissage et recevant intérieurement la bobine 134, et dont l'autre 139 présente la forme d'une rondelle retenant la bobine 134 à l'intérieur du godet 138.

Ce dernier présente une paroi de fond annulaire plate 140, de révolution autour de l'axe 2 auquel elle est perpendiculaire, présentant une périphérie intérieure 141 d'un diamètre supérieur au diamètre de la face périphérique extérieure 42 de la zone en forme de manchon 40 de la pièce rapportée 38, mais néanmoins voisin de ce diamètre de telle sorte que le godet 138 s'ajuste par la périphérie intérieure 141 de sa paroi de fond 140 sur cette face périphérique extérieure 42 par l'intermédiaire d'un manchon 142 en matériau amagnétique et isolant vis-à-vis de l'électricité, garnissant en totalité cette face 42 de la face 48 de la zone en forme de colle-

rette 46 à la face 45 de la zone de fond 43.

La paroi de fond 140 du godet 138 présente par ailleurs une périphérie extérieure 143 également de révolution autour de l'axe 2, et par laquelle elle se raccorde à une paroi périphérique 144 du godet 138 ; cette paroi 144, délimitée notamment par des faces périphériques intérieure 145 et extérieure 146 cylindriques de révolution autour de l'axe 2, avec un diamètre inférieur à celui de la face périphérique 33 du trou borgne 32 de la partie 13 du corps 7, est située au-delà de la paroi de fond 140 dans le sens d'un éloignement par rapport au plan 5, la paroi de fond 140 étant disposée à proximité de la face 48 de la zone en forme de collerette 46 de la pièce rapportée 38 sans toutefois entrer en contact avec cette face, et présente la caractéristique d'être subdivisée par des fentes 147, parallèles à l'axe 2, en une alternance de pattes telles que 148 comparativement longues parallèlement à l'axe 2 et de dimensions comparativement faibles transversalement par rapport à celui-ci, et de pattes 149 comparativement plus courtes parallèlement à l'axe 2 et d'un développement angulaire, en référence à celui-ci, comparativement supérieur.

Les fentes 140 sont ouvertes dans le sens d'un éloignement par rapport au plan général 5 parallèlement à l'axe 2 et ne s'interrompent, dans le sens d'un rapprochement par rapport au plan général 5, qu'à proximité immédiate de la paroi de fond 140, et les pattes 148 comparativement longues qu'elles dégagent ainsi présentent, transversalement par rapport à l'axe 2 et notamment quant à leur développement angulaire en référence à ce dernier, des dimensions suffisamment faibles pour présenter une flexibilité élastique alors que les pattes 149 sont comparativement rigides.

Les pattes comparativement rigides 149 sont utilisées pour assurer la liaison mécanique et la continuité magnétique entre la paroi de fond 140 et la rondelle 139, qui présente une forme comparable à celle de la paroi de fond 140 du godet 138, avec notamment une périphérie extérieure 150 cylindrique de révolution autour de l'axe 2 avec un diamètre égal à celui de la face périphérique extérieure 146 de la paroi 144 du godet 138 et une périphérie intérieure 151 également cylindrique de révolution autour de l'axe 2, avec un diamètre égal à celui de la périphérie intérieure 141 de la paroi de fond 140 ; pour autoriser cette liaison, sans nuire à la possibilité de fléchissement élastique des pattes comparativement flexibles 148, la périphérie extérieure 150 de la rondelle 139 présente autour de chacune de ces dernières une encoche 152 laissant subsister de toute part un jeu autour de la patte comparativement flexible 148 associée tout en autorisant un contact de la rondelle 139 contre chacune des pattes comparativement rigides 149 dans la zone 153 de ces pattes la plus éloignée du plan 5, et la soudure mutuelle de la rondelle 139 et des pattes 149 par exemple par décharge électrique.

Comme le montre la figure 3, les pattes 148 comparativement flexibles dépassent alors de la rondelle 139 et, par leur zone 154 la plus éloignée du plan 5 et ainsi en saillie au-delà de la rondelle 139, sont soudées sur la zone 36 de la face de fond 35 du trou borgne 32, ce qui assure le montage de l'armature 137 à l'intérieur de la cavité 39 de la partie 13 du corps 7.

Compte tenu de la flexibilité élastique des pattes 148, les déformations thermiques de cette partie 13 ne se transmettent pratiquement pas à la paroi de fond 140 et aux pattes 149 du godet 138, et à la rondelle 139, c'est-à-dire restent pratiquement sans influence sur les caractéristiques magnétiques de l'armature 137 en dépit des propriétés élevées de magnétostriction du matériau constituant généralement cette armature.

Une compressibilité élastique du matériau constituant le manchon 142 permet d'éviter également la transmission de

0143702

contraintes mécaniques de la zone en forme de manchon 40 de la
pièce rapportée 38 aux périphéries intérieures respectives 141 et
151 de la paroi de fond 140 du godet 138 et de la rondelle 139.

A l'intérieur de l'armature 137, la
bobine 134 est intercalée entre deux
rondelles 155 et 156 en matériau isolant vis-à-vis de l'électricité,
respectivement vers la rondelle 139 et vers la paroi de fond 140
du godet 138, une rondelle élastique 157 étant intercalée entre
cette paroi de fond 140 et la rondelle 156 pour assurer élastiquement une immobilisation de la bobine 134 à l'intérieur de l'armature 137, entre la paroi 140 et la rondelle 139, suivant une direction parallèle à l'axe 2 ; les rondelles 155 à 157, comme la bobine
134 elle-même, présentent des périphéries intérieures respectives
158, 159, 160, 161 d'un diamètre sensiblement identique à celui
des périphéries intérieures respectives 141 et 151 de la paroi de
fond 140 du godet 138 et de la rondelle 139 pour permettre un
montage sans jeu autour du manchon 142.

Les deux fils de raccordement électrique 135 et 136 de
la bobine 134 sortent de l'armature 137 par l'une des fentes 147
de la paroi 144 du godet 138, et sortent de la partie 13 du corps 7
par un canal 161 aménagé à cet effet dans cette partie 13, radialement par rapport à l'axe 2, et qui constitue une exception à
la forme, de révolution autour de l'axe 2, de la partie 13 du
corps 7 ; ce canal 161 débouche d'une part à la jonction entre la
face périphérique 33 du trou borgne 32 et la partie en décrochement
34 et d'autre part dans la face 21 de la partie 13 du corps 7
et il est doublé intérieurement d'un tube 162 en matériau isolant
vis-à-vis de l'électricité.

Sur la face 20 de la partie 13 du corps 7 sont fixées,
par l'intermédiaire de manchons isolants vis-à-vis de l'électricité
163, deux bornes telles que 164 sur lesquelles les fils 135 et 136, respectivement, sont soudés et qui servent respectivement à la connexion, via un trou 92 de la bague 103, du conducteur 135 avec une source 165 lui appliquant une tension déterminée -V, et du conducteur 136 avec des moyens 166 de mesure de tension, de tout type connu en soi de l'homme du métier ; ce raccordement est illustré à la figure 4.

L'inductance 133 logée dans la cavité 84 de la partie 14 du corps 7 est en tout point identique à l'inductance 132 qui vient d'être décrite. ; elle comporte notamment une bobine simple 167 identique à la bobine 134, et une armature 168 identique à l'armature 137, montée de façon identique dans la cavité correspondante et recevant de façon identique la bobine associée 167.

Cette dernière présente deux conducteurs électriques de raccordement 169 et 170 qui correspondent respectivement aux conducteurs 135 et 136 et sortent de la partie 14 du corps 7 via l'une 171 des fentes correspondant, sur l'armature 168, aux fentes 147 de l'armature 137, et via un canal 172 qui est aménagé dans la partie 14 selon une disposition symétrique de celle du canal 161, par rapport au plan 5, et qui est doublé d'un tube 173 en tout point semblable au tube 162 ; comme la partie 13, la partie 14 porte, par l'intermédiaire de manchons respectifs tels que 174 isolant vis-à-vis de l'électricité, deux bornes telles que 175 sur lesquelles sont respectivement soudés les conducteurs 169 et 170, en vue d'un branchement respectivement à la source de tension 165 et aux moyens de mesure de tension 166 via le trou 92, comme il est illustré à la figure 4.

Sur cette figure, on voit que la source de tension 165 injecte une tension +V dans le conducteur 169, alors que le raccordement du conducteur 170 aux moyens de mesure 166 est commun au conducteur 136.

Comme il est connu de l'homme du métier, chacune des deux inductances 132 et 133 présente une impédance qui est fonction de la position qu'occupe, selon l'axe de la bobine correspondante respectivement 134 ou 167, c'est-à-dire suivant l'axe 2, le noyau magnétique associé, respectivement 118 ou 127, par lequel se ferme le circuit magnétique de l'armature correspondante, respectivement 137 ou 168, à travers la pièce rapportée, respectivement 38 ou 83, dans le mode de mise en oeuvre préféré de l'invention qui a été décrit ; en effet, à cette position correspond pour le flux magnétique le franchissement d'un entrefer représentatif entre l'extrémité du noyau, respectivement 118 ou 127, la plus éloignée du plan 5 et la partie de l'armature, respectivement 137 ou 168, également la plus éloignée de ce plan 5 (c'est-à-dire ici le fond tel que 139 de cette armature).

Du fait de l'identité des bobinages 118 et 167 et de la symétrie existant d'une part entre les noyaux magnétiques 118 et 128, d'autre part entre les armatures 137 et 168, l'application d'une pression identique respectivement sur la face 65 du diaphragme séparateur 56, c'est-à-dire dans la chambre 66, et sur la face 97 du diaphragme séparateur 86, laquelle se traduit par un maintien du diaphragme 1 au repos, c'est-à-dire par une symétrie réciproque des noyaux 118 et 128 par rapport au plan 5, c'est-à-dire encore par une position identique de l'un et l'autre en référence à l'inductance associée, respectivement 132 ou 133, a pour résultat une identité des impédances respectives des inductances 132 et 133, se traduisant par l'application d'une tension nulle aux moyens de mesure 166 ; si, par contre, les pressions régnant dans les chambres 66 et 99 sont différentes, le diaphragme 1 et, avec lui, les noyaux magnétiques 118 et 129 se déplacent parallèlement à l'axe 2 vers la chambre 66 ou 99 dans laquelle la pression est relativement plus faible, ce qui correspond à une augmentation de l'impédance de l'inductance, respectivement 132 ou 133, située du même côté du plan 5 que cette chambre, et par une réduction de l'impédance de l'autre inductance compte tenu du mode de branchement des bobines 134 et 167, ceci se traduit par l'application aux moyens 166 d'une tension dont la phase est représentative du sens de déplacement conjoint des deux noyaux selon l'axe 2, et dont l'amplitude est représentative de la valeur de ce déplacement, elle-même représentative de la valeur de la différence entre les pressions régnant respectivement dans les chambres 66 et 99. Cette tension est traitée par le circuit 166 pour délivrer un signal représentatif de la différence des inductances des deux bobines.

Le mode de mise en oeuvre de l'invention qui vient d'être décrit constitue un mode de mise en oeuvre préféré ; cependant, lorsque la nature des fluides dont on désire comparer les pressions le permettra, on pourra également, sans sortir pour autant du cadre de l'invention, prévoir une application directe de l'une et l'autre de ces pressions aux faces 11 et 12 du diaphragme séparateur 1, sans avoir recours aux diaphragmes séparateurs 56 et 86 et aux fluides hydrauliques intermédiaires qui ont été décrits ; l'homme du métier pourra apporter à ce qui a été décrit les modifications nécessaires sans sortir pour autant du cadre de la présente invention ; dans ce cas également, il sera particulièrement avantageux de conserver une étanchéité entre les inductances 132 et 133 et le fluide sollicitant les deux faces du diaphragme de mesure 1, grâce à des moyens amagnétiques comparables aux pièces rapportées 38 et 83, intercalés entre chaque inductance et le noyau associé, ainsi que le montage élastique des armatures des inductances qui a été décrit, ceci au moins lorsque le capteur est destiné à travailler dans des conditions de température susceptibles de varier.

De même, d'autres moyens de comparaison entre les impédances respectives des inductances 132 et 133 pourront être choisis par l'homme du métier sans que l'on sorte pour autant du cadre de la présente invention.

## REVENDICATIONS

1. Capteur inductif de pression différentielle, du type comportant :

- un corps rigide (7), délimitant une chambre interne (8),

- un diaphragme flexible de mesure (1), subdivisant la chambre (8) en deux demi-chambres (9, 10), de façon étanche,

- des moyens (56, 66, 86, 99) pour appliquer deux pressions à comparer respectivement à l'une et l'autre demi-chambres (9, 10), une zone centrale (3) du diaphragme (1) étant apte à se déplacer d'une valeur représentative de la valeur de la différence entre ces deux pressions, selon une direction de référence (2) perpendiculaire à un plan de référence (5) fixe par rapport au corps (7) et défini par un plan général du diaphragme (1) supposé au repos,

- des moyens électromagnétiques (118, 127, 132, 133, 165, 166) de mesure de ce déplacement, par induction, caractérisé en ce que les moyens électromagnétiques de mesure comportent :

- deux noyaux magnétiques (118, 127) identiques, portés de façon solidaire par la zone centrale (3) du diaphragme (1), et disposés symétriquement l'un de l'autre de part et d'autre de celle-ci, respectivement dans l'une et l'autre demi-chambres (9, 10), selon un alignement mutuel parallèle à la direction de référence (2),

- deux inductances simples (132, 133) identiques portées de façon solidaire par le corps (7), dans des positions symétriques l'une de l'autre par rapport au plan de référence (5), selon un alignement mutuel parallèle à la direction de référence (2), chaque inductance (132, 133) étant disposée autour de l'un respectif des noyaux (118, 127) de façon à présenter une impédance fonction de la position de ce dernier par rapport à elle,

- des moyens (135, 136, 169, 170) de liaison électrique des deux inductances (132, 133) avec des moyens (166) pour effectuer la différence de leurs impédances,

- le corps (7) présentant au moins une symétrie partielle par rapport audit plan de référence.

2. Capteur selon la revendication 1, caractérisé en ce que le corps (7) porte de façon solidaire des moyens (38, 83) définissant autour de chaque inductance (132, 133), dans le corps (7), une cavité (39, 84) étanche vis-à-vis de la chambre interne (8), ces moyens (38, 83) étant amagnétiques au moins entre l'inductance correspondante (132, 133) et le noyau magnétique (118, 127) associé à celle-ci.

3. Capteur selon la revendication 2, caractérisé en ce que chaque inductance (132, 133) comporte une armature (137, 168) à l'intérieur de la cavité (39, 84) correspondante, et est portée par le corps (7), à l'intérieur de ladite cavité (39, 84) par l'intermédiaire d'une pluralité de pattes (148) élastiques solidaires d'une part de l'armature (137, 168), et d'autre part du corps (7).

4. Capteur selon la revendication 3, caractérisé en ce que lesdites pattes (148) font partie intégrante de l'armature (137, 168), et sont dégagées du reste de celle-ci par des fentes (147, 171), les pattes (148) étant orientées sensiblement parallèlement à la direction de référence (2).

5. Capteur selon l'une quelconque des revendications 1 à 4, caractérisé en ce que les moyens (56, 66, 86, 99) pour appliquer deux pressions à comparer respectivement à l'une et l'autre demi-chambres (9, 10) comportent :

- deux faces externes (17, 85) du corps (7),

- deux diaphragmes séparateurs (56, 86) flexibles, identiques, à raison d'un en regard de chacune des faces externes (17, 85) du corps (7) avec laquelle il délimite de façon étanche un volume intermédiaire (55, 89), les deux diaphragmes séparateurs (56, 86) présentant vers l'intérieur du volume intermédiaire (66, 99) respectivement associé des faces internes respectives (64, 96) de même superficie et vers l'extérieur de ce volume (66, 99) des faces externes respectives (65, 97) de même superficie, propres à recevoir respectivement l'une et l'autre pressions à comparer,

    - deux réseaux hydrauliques indépendants (53, 54, 90, 91), dont chacun relie l'une respective des demi-chambres (9, 10) à l'un respectif des volumes intermédiaires (55, 89),

    - un fluide hydraulique, sensiblement incompressible, remplissant l'un et l'autre réseaux (53, 54, 90, 91), les demi-chambres (9, 10) et les volumes intermédiaires (66, 99) et en ce que le corps (7) délimite en regard des faces externes respectives (65, 97) des deux diaphragmes séparateurs (56, 86) deux chambres (66, 99) de réception de fluides définissant respectivement l'une et l'autre des pressions à comparer.

    6. Capteur selon l'une quelconque des revendications précédentes, en combinaison avec des moyens (166) pour effectuer la différence des impédances des deux inductances (132, 133).

FIG.1

0143702

2/2

FIG.2

FIG.3

FIG.4